# EUROPÄISCHE PATENTANMELDUNG

(11) **EP 0 875 366 A2**
(43) Veröffentlichungstag der Anmeldung: **04.11.1998**
(21) Anmeldenummer: 98107320.8
(22) Anmeldetag: 22.04.1998
(51) Int. Cl.: B29D 30/60, B60C 19/08, B60C 1/00

(54) **Verfahren zur Herstellung eines Fahrzeugluftreifens**

(30) Priorität: 02.05.1997 DE 19718699
(71) Anmelder: Continental Aktiengesellschaft, 30165 Hannover (DE)
(72) Erfinder: Jenke, Roland, 29693 Hademstorf (DE)

(57) **Zusammenfassung**

Die Erfindung bezieht sich auf ein Verfahren zum Herstellen eines Fahrzeugluftreifens, bei dem zum Erzeugen und Auflegen eines vorzugsweise unvulkanisierten Laufstreifens auf einen Teilreifen, der bereits eine bombierte Karkasse sowie radial außen davon ein Gürtelpaket, dessen Gummierung im vulkanisierten Zustand einen spezifischen elektrischen Widerstand < 10⁸ Ohm x cm besitzt, aufweist, zumindest ein Materialstreifen in zahlreichen im wesentlichen aneinander liegenden in Reifenumfangsrichtung verlaufenden Windungen auf den Teilreifen gewickelt wird.

Um einen Fahrzeugluftreifen bereitzustellen, der eine gesicherte Ableitfähigkeit gewährleistet und gleichzeitig einfach und unkompliziert hergestellt werden kann, wird vorgeschlagen, daß zumindest ein Materialstreifen aus Kautschuk und/oder Kunststoff eingesetzt wird, durch den in Reifenquerrichtung zumindest zwei Zonen erzeugt werden, deren Trennflächen in der Laufstreifenoberfläche münden, wobei eine Zone im vulkanisierten Zustand einen spezifischen elektrischen Widerstand < 10⁸ Ohm x cm besitzt.

## Beschreibung

Die Erfindung betrifft ein Verfahren zum Herstellen eines Fahrzeugluftreifens, bei dem zum Erzeugen und Auflegen eines vorzugsweise unvulkanisierten Laufstreifens auf einen Teilreifen, der bereits eine bombierte Karkasse sowie radial außen davon ein Gürtelpaket, dessen Gummierung im vulkanisierten Zustand einen spezifischen elektrischen Widerstand < 10⁸ Ohm x cm besitzt, aufweist, zumindest ein Materialstreifen in zahlreichen im wesentlichen aneinander liegenden in Reifenumfangsrichtung verlaufenden Windungen auf den Teilreifen gewickelt wird.

Bei einem Fahrzeug besteht im allgemeinen das Problem, dass es während des Fahrbetriebes elektrisch aufgeladen wird. Eine ausreichende Ableitung der elektrostatischen Ladungen ist aber nur dann gegeben, wenn die Aufstandsfläche des Reifens ausreichend leitfähig ist und mit der Fahrbahn stetigen Kontakt hat. Wenn das nicht der Fall ist, können unangenehme Entladungen eintreten. Insbesondere bei kieselsäurehaltigen Laufflächen, die dem Reifen an sich gute Fahreigenschaften, wie einen geringen Rollwiderstand und gute Naßrutscheigenschaften verleihen, ist deren niedrigere elektrische Leitfähigkeit eine mischungsbedingte nachteilige physikalische Eigenschaft.

In der Vergangenheit hat es nicht an Versuchen gemangelt, die elektrische Leitfähigkeit von kieselsäurehaltigen Reifenlaufstreifen zu erhöhen. Derartige Maßnahmen sind z. B. aus der EP 0 658 452 A1 oder aus der EP 0 718 127 A1 bekannt. Die Herstellung der dort beschriebenen Laufstreifen erfolgt im allgemeinen in einem Mehrfach-Extruder, der es ermöglicht, beide Kautschukmischungen in der Gesamtbreite des Laufstreifens in einem Verfahrensschritt zu extrudieren. Für diesen Verfahrensschritt sind aufwendige und große Extruder erforderlich, die insbesondere bei der Variante der EP 718 127 A1 komplizierte Mundstücke aufweisen müssen. Ein weiterer Nachteil der in diesen Dokumenten offenbarten Möglichkeiten besteht darin, dass der Extrusionvorgang mit dem späteren Profildesign abgestimmt werden muß, da eine Ableitfähigket nur gegeben ist, wenn sich eine leitfähige Schicht in erhabenen Profilelementen (Profilklötzen) befindet, um den Fahrbahnkontakt zu gewährleisten.

Der vorliegenden Anmeldung liegt die Aufgabe zugrunde, einen Fahrzeugluftreifen bereitzustellen, der eine gesicherte Ableitfähigkeit gewährleistet und gleichzeitig einfach und unkompliziert hergestellt werden kann.

Gelöst wird diese Aufgabe erfindungsgemäß dadurch, dass für die Herstellung des Fahrzeugluftreifens ein Verfahren zur Anwendung kommt, bei dem zumindest ein Materialstreifen aus Kautschuk und/oder Kunststoff eingesetzt wird, durch den in Reifenquerrichtung zumindest zwei Zonen erzeugt werden, deren Trennflächen in der Laufstreifenoberfläche münden, wobei eine Zone im vulkanisierten Zustand einen spezifischen elektrischen Widerstand < 10⁸ Ohm x cm besitzt.

Ein Verfahren zur Herstellung eines Fahrzeugluftreifens, bei dem ein Kautschukmaterialstreifen in zahlreichen im wesentlichen aneinander liegenden Windungen um einen Teilreifen gewickelt wird, ist aus dem Stand der Technik (R. A. Cronin: Elastomerics, August 1987, Seiten 24 bis 27) bereits bekannt. Die Vorteile dieses Verfahrens liegen insbesondere darin, daß nur kleine Extruder für die Laufstreifenmischungen bereitgestellt werden müssen und der Materialstreifen warm um den Teilreifen gewickelt wird, ohne daß ein Laufstreifen mit Splice gebildet wird, wodurch auf eine Verwendung von Benzinlösungen, die bisher als Haftvermittler dienten, verzichtet werden kann. Erfindungsgemäß konnte dieses Verfahren in der Art abgewandelt werden, dass Fahrzeugluftreifen erhalten werden, die über die gesamte Bodenaufstandsfläche eine hervorragende Ableitfähigkeit von elektrostatischen Ladungen besitzen.

Für die Herstellung eines solchen Fahrzeugluftreifens können ein oder mehrere im wesentlichen flache Materialstreifen (bevorzugtes Verhältnis zwischen Breite zur Dicke > 7:1) aus Kautschuk und/oder Kunststoff verwendet werden. Prinzipiell ist es dabei möglich, mehrere Materialstreifen in Längsrichtung aneinander zu setzen. Der einzelne Materialstreifen ist aus zumindest zwei Schichten in seiner Längsrichtung aufgebaut, wobei eine Schicht im vulkanisierten Zustand einen spezifischen elektrischen Widerstand < 10⁸ Ohm x cm besitzt, so dass diese Schicht die leitfähige Zone in der Lauf-streifenoberfläche bildet. Diese Schicht kann schmaler ausgebildet sein als die andere nicht leitfähige Schicht des Materialstreifens. Die unterschiedlichen Schichten können z. B. in der Art erzeugt werden, dass mittels Coextrusion in einem Duplexextruder beide Schichten zusammengeführt werden und den unvulkanisierten Materialstreifen bilden. Es ist auch möglich, die einzelnen Schichten jeweils getrennt zu extrudieren und anschließend miteinander zu dublieren. Wenn die Erzeugung des Materialsstreifens durch einen Extruder erfolgt, sind für die Herstellung der Kautschukmischung für den Materialstreifen einfache Extruderanlagen einsetzbar. Dabei ist es z. B. möglich, eine aus dem Stand der Technik bekannte Rußmischung für Reifenlaufstreifen als leitfähige Schicht zu verwenden und eine kieselsäurehaltige Kautschukmischung als weitere Schichtkomponente einzusetzen. Bei dieser Kombination sind Fahrzeugluftreifen herstellbar, die hervorragenden Rollwiderstand und einen geringes Naßrutschverhalten bei gleichzeitig hohem Ableitungsvermögen aufweisen. Weiterhin besteht die Möglichkeit, einen Zweischichten-Materialstreifen zu erzeugen, in dem ein Materialstreifen, der aus einer einzigen Schicht besteht, durch Sprühen oder Tauchen auf diesen, eine weitere, d. h. leitfähige Schicht aufzubringen. Für diese Variante können aus dem Stand der Technik einfache Anlagen zum Sprühen bzw. Tauchen verwendet werden. Für die Herstellung der leitfähigen Sprüh- bzw. Tauchlösung können z. B. in Lösung gebrachte leitfähige Mischungen Verwendung finden. Des Weiteren ist es möglich, dass für solche Lösungen leitfähige Polymere z. B. Polyaniline bzw. Polypyrrole eingesetzt werden. Diese Lösungen können auf der Basis von Kautschuk und/oder Kunststoff hergestellt werden. Die Schichtdicke der leitfähigen Komponente kann durch mehrmaliges Sprühen bzw. Tauchen variiert werden.

Es ist aber auch möglich, dass mehrere einzelne Materialstreifen nebeneinander, bezogen auf die Axialrichtung des Teilreifens, gewickelt werden. Dabei besteht z. B. ein Materialstreifen aus einer homogenen im vulkanisierten Zustand schlecht leitenden Mischung und der daran, bezogen auf den Teilreifen, axial angrenzende Materialstreifen aus einer leitfähigen Mischung, so dass sich im fertigen Reifen schlecht leitende und gut leitende Zonen abwechseln. Dabei kann die Breite der einzelnen Materialstreifen variieren. Vorzugsweise sollen zwei einzelne Materialstreifen gleichzeitig aufgewickelt werden, jedoch ist es auch denkbar, erst einen Materialstreifen aufzuspulen (z. B. eine Windung) und anschließend den zweiten Materialstreifen angrenzend aufzubringen. Diese Aufbringungsvarianten sind abhängig von der Geometrie (z. B. Breite) der jeweiligen Materialstreifen. Die Herstellung der einzelnen Materialstreifen erfolgt z. B. in einem Extruder. Als Kautschukmischungen können wie bereits bei der Variante des zweischichtigen Materialstreifenaufbaues erwähnt z. B. ruß- bzw. kieselsäureenthaltende Mischungen verwendet werden.

Die Form des Materialstreifens sollte vorzugsweise, wie bereits erwähnt, ein Breiten-Dickenverhältnis > 7:1 aufweisen. Dabei soll der Materialstreifen mit seiner breiten Seite um den Teilreifen gewickelt werden und bei dessen anschließender Windung mit der Vorhergehenden bzw. bei Verwendung von mehreren Materialstreifen mit dem vorhergehenden Materialstreifen in Kontakt stehen. Da durch den oder die Materialstreifen zwei Zonen erzeugt werden, wobei eine davon leitfähig ist und die Trennfläche dieser beiden Zonen an der Laufstreifenoberfläche endet, wird eine wendelförmige Ableitung von der Bodenaufstandsfläche in das Reifeninnere (zur leitfähigen Gürtelpaketgummierung) sichergestellt. Der oder die verwendeten Materialstreifen können dabei unterschiedliche Querschnittsformen aufweisen. So sind z. B. mehrschichtige flache Rechtecke, Dreiecke oder Rhomben, ellipsen- bzw. kreisabschnittsformige Geometrien denkbar.

Zur Erzeugung eines Fahrzeugluftreifens nach dem erfindungsgemäßen Verfahren wird zumindest ein Materialstreifen, durch den in Reifenquerrichtung zwei Zonen erzeugt werden, wobei eine davon im vulkanisierten Zustand eine gute Leitfähigkeit aufweist, um den Teilreifen gewickelt. Dieser Teilreifen weist eine bereits bombierte Karkasse und radial außen davon ein Gürtelpaket auf, dessen Gummierung im vulkanisierten Zustand einen spezifischen elektrischen Widerstand < 10⁸ Ohm x cm besitzt. Bei dem Begriff 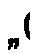 Gürtelpaket" ist ein Gürtel und/oder Bandage gemeint, die in Gummi eingebettete metallische oder textile Festigkeitsträger enthält. Es ist auch möglich, dass zwischen diesen einzelnen Schichten (Karkasse und/oder Gürtel und/oder Bandage) Verstärkungsplatten aus Kautschuk bzw. Gummi vorhanden sind. Des Weiteren ist es auch möglich, dass als radial äußerste Schicht des Teilreifens sich eine Kautschuk oder Gummischicht befindet. Diese kann möglicherweise auch im vulkanisierten Reifenlaufstreifen die Funktion einer Laufflächenunterschicht (Baseschicht) übernehmen. In jedem Fall ist es aber wichtig, dass diese radial äußerste Schicht des Teilreifens elektrisch leitfähig ist, damit überhaupt elektrostatische Ladungen von der Fahrbahnoberfläche in den Reifen hineingeleitet werden können.

Prinzipiell ist es aber auch möglich, den Reifenaufbauprozeß so zu gestalten, daß ein Laufstreifen/Gürtelringpaket auf einen Teilreifen, der bereits eine bombierte Karkasse aufweist, aufgelegt wird. In diesem Fall wird der Laufstreifen durch Umwickeln zumindest eines Materialstreifens, der im vulkanisierten Zustand in der Laufstreifenoberfläche eine Zone bildet, die einen spezifischen elektrischen Widerstand < 10⁸ Ohm x cm aufweist und in Kontakt mit der Gummierung des Gürtelringpaketes steht, erzeugt. Erfindungsgemäß besteht der Materialstreifen entweder aus zumindest zwei Schichten aus Kautschuk und/oder Kunststoff, wobei eine Schicht im vulkanisierten Zustand ebenfalls einen spezifischen elektrischen Widerstand < 10⁸ Ohm x cm aufweist oder es werden zumindest zwei einzelne Materialstreifen mit entsprechenden leitfähigen Merkmalen eingesetzt. Die Trennfläche dieser Schichten bzw. Materialstreifen befindet sich in der Laufstreifenoberfläche. Der Vorteil dieser Verfahrensweise liegt darin, dass einzelne Reifenbauteile unabhängig voneinander gefertigt werden können und eine bedarfsgerechte Reifenherstellung erfolgen kann.

Das erfindungsgemäße Verfahren kann für die Herstellung von Neureifen, d. h. die Aufbringung des Materialstreifens erfolgt auf einen unvulkanisierten Teilreifen, verwendet werden. Es ist aber auch möglich, dieses Verfahren für vor- bzw. fertigvulkanisierte Teilreifen anzuwenden. Damit es auch möglich, unkompliziert Runderneuerungen vorzunehmen, bei denen Reifen mit ausreichender Ableitfähigkeit, die umlaufend gesichert ist, erzeugt werden.

Anhand einer Zeichnung soll ein Ausführungsbeispiel näher erläutert werden.
- Fig. 1: zeigt schematisch den Aufbau einer Vorrichtung für die Durchführung des erfindungsgemäßen Verfahrens.
- Fig. 2: zeigt schematisch den Querschnitt eines Fahrzeugluftreifens, der durch das erfindungsgemäße Verfahren hergestellt worden ist.
Aus einem Duplex-Extruder 1 wird ein Materialstreifen 2 gefördert, der aufgrund des Extruder-Mundstückes einen runden Querschnitt aufweist. Dieser Materialstreifen 2 besteht in seiner Längsrichtung zu nahezu gleichen Teilen aus zwei verschiedenen Kautschukmischungen, die schichtweise aneinander grenzen. Über Umlenkrollen 3 und ein nicht näher dargestelltes Walzwerk wird der extrudierte Rundschnurmaterialstreifen (Durchmesser ca. 1 cm) in eine flache Rechteckquerschnittsform (ca. 16 x 2 mm) überführt. Über einen Auflagekopf 4 wird der Teilreifen 5, der frei drehbar gelagert ist, angetrieben. Über eine Computersteuerung 6 wird ausgehend von der Extrusion des Materialstreifens 2 über den beweglichen Auflagekopf 4 der flachgewalzte Materialstreifen mit seiner breiten Seite auf den Teilreifen 5 gespult. Dieser Teilreifen 5 weist als seine radial äußerste Schicht eine im vulkanisierten Zustand leitfähige Bandagengummierung auf. Das Aufspulen des Materialstreifens 2 erfolgt in der Art, dass ein bis zwei Windungen des Materialstreifens 2 auf die Seitenwand des Teilreifens 5 gespult werden und daran anschließend der Reifenlaufstreifen von einer axialen Begrenzung in Reifenumfangsrichtung zu seiner anderen axialen Begrenzung aufgewickelt wird. Über die Computersteuerung 6 wird festgelegt, in welchem Maße die aneinander grenzenden aus Schichten aufgebauten Materialstreifenwindungen überlappen. Dabei ist es aber auch möglich, dass die Materialstreifenwindungen nur auf Stoß in Reifenumfangsrichtung aneinander grenzen. Der Auflagekopf 4 wird so gesteuert, dass dieser pro Umdrehung des Teilreifens 5 insgesamt 1 bis 15 mm in Axialrichtung des Reifens verschoben wird. Durch diesen Aufwickelvorgang wird sichergestellt, dass im vulkanisierten Zustand zumindest eine leitfähige Schicht des Materialstreifens 2 sich wendelförmig von einer axialen Begrenzung des Laufstreifens zur anderen in Reifenumfangsrichtung stets ein Kontakt zur Fahrbahnoberfläche gewährleistet wird. Durch ein geeignetes Steuersystem 6 ist es möglich, die Laufstreifendicke zu beeinflussen bzw. den Auflagekopf 4 mehrere Male von einer axialen Seite zur anderen den Materialstreifen aufwickeln zu lassen. Durch einen nicht näher beschriebenen Anrollvorgang wird der Materialstreifen 2 auf den Teilreifen 5 gedrückt. Anschließend kann die Vulkanisation des fertig gewickelten Reifenrohlings erfolgen. Erzielt werden Fahrzeugluftreifen, die einer gesicherten Ableitung von elektrostatischer Ladung von der Fahrbahnoberfläche über eine leitfähige Schicht des Laufstreifens, über weitere leitfähige Schichten in dem Reifen bis hin zur Felge gewährleisten.

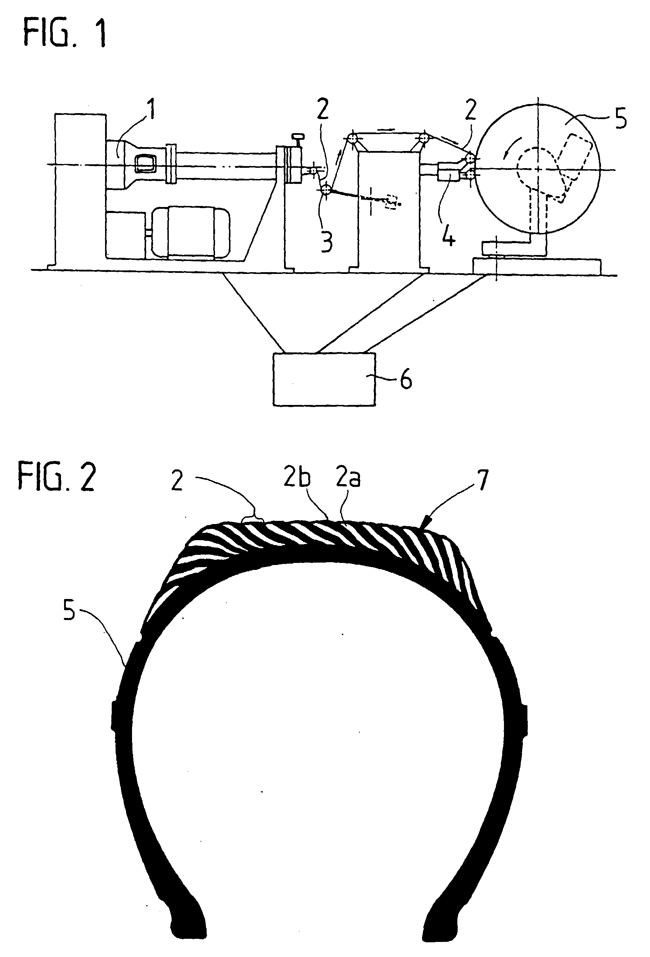

Die Figur 2 verdeutlicht einen Querschnitt eines durch das erfindungsgemäße Verfahren hergestellten Fahrzeugluftreifens. Der Laufstreifen 7 wurde auf den Teilreifen 5 in der Art aufgebracht, dass ein Materialstreifen 2 aus zwei Schichten besteht (2a und 2b), wobei die Schicht 2a im vulkanisierten Zustand einen spezifischen elektrischen Widerstand von < 10⁸ Ohm x cm aufweist. Diese Schicht 2a steht radial innen mit einer nicht dargestellten zum Gürtelpaket zählenden, ebenfalls leitfähigen Schicht in Kontakt. Die Ableitung elektrischer Ladungen erfolgt über diese leitende Schicht des Gürtelpaketes, über weitere leitfähige Schichten wie z. B. der Karkass-Gummierung bzw. der Seitenwandgummierung bis hin zur Felge. Der Materialstreifen 2 wurde in der Art erzeugt, dass ein extrudierter Kautschukstreifen aus der Mischung 2b, die eine kieselsäureenthaltende Zusammensetzung aufweisen soll, durch ein Tauchbecken gezogen worden ist, worin sich eine Kautschuklösung (Kautschukmischung, die im vulkanisierten Zustand leitfähig ist in Benzin gelöst) befindet. Dieser dünne aufgebrachte die Leitfähigkeit positiv beeinflussende Film 2a ist ausreichend für eine gesicherte Ableitfähigkeit.

Mit diesem erfindungsgemäßen Verfahren werden Fahrzeugluftreifen erzeugt, die die optimalen Fahreigenschaften von z. B. kieselsäurehaltigen Gummimischungen aufweisen und gleichzeitig das Problem der schlechten Ableitfähigkeit gelöst wird. Diese Fahrzeugluftreifen können verfahrenstechnisch unkompliziert und kostengünstig hergestellt werden, sowohl als Neureifen als auch als runderneuerter Reifen.

## Patentansprüche

1. Verfahren zum Herstellen eines Fahrzeugluftreifens, bei dem zum Erzeugen und Auflegen eines vorzugsweise unvulkanisierten Laufstreifens auf einen Teilreifen, der bereits eine bombierte Karkasse sowie radial außen davon ein Gürtelpaket, dessen Gummierung im vulkanisierten Zustand einen spezifischen elektrischen Widerstand < 10⁸ Ohm x cm besitzt, aufweist, zumindest ein Materialstreifen in zahlreichen im wesentlichen aneinander liegenden in Reifenumfangsrichtung verlaufenden Windungen auf den Teilreifen gewickelt wird,
**dadurch gekennzeichnet**, dass
zumindest ein Materialstreifen (2) aus Kautschuk und/oder Kunststoff eingesetzt wird, durch den in Reifenquerrichtung zumindest zwei Zonen (2a, 2b) erzeugt werden, deren Trennflächen in der Laufstreifenoberfläche münden, wobei eine Zone im vulkanisierten Zustand einen spezifischen elektrischen Widerstand < 10⁸ Ohm x cm besitzt.

2. Verfahren zum Herstellen eines Laufstreifens/Gürtelringpaketes, das auf einen Teilreifen, der bereits eine bombierte Karkasse aufweist, aufgelegt wird, wobei das Gürtelringpaket gummierte Festigkeitsträger enthält, deren Gummierung im vulkanisierten Zustand einen spezifischen elektrischen Widerstand < 10⁸ Ohm x cm besitzt, dadurch gekennzeichnet, dass zumindest ein Materialstreifen (2) aus Kautschuk und/oder Kunststoff in zahlreichen im wesentlichen aneinanderliegenden in Gürtelumfangsrichtung verlaufenden Windungen auf das Gürtelringpaket gewickelt wird, durch den in Gürtelquerrichtung zumindest zwei Zonen (2a, 2b) erzeugt werden, deren Trennflächen in der Laufstreifenoberfläche münden, wobei eine Zone im vulkanisierten Zustand einen spezifischen elektrischen Widerstand < 10⁸ Ohm x cm besitzt.

3. Verfahren nach Anspruch 1 oder 2, dadurch gekennzeichnet, dass ein vor- oder fertigvulkanisierter Teilreifen verwendet wird.

4. Verfahren nach Anspruch 1 oder 2, dadurch gekennzeichnet, dass ein Teilreifen, der unvulkanisiert ist, verwendet wird.

5. Verfahren nach zumindest einem der vorhergehenden Ansprüche, dadurch gekennzeichnet, dass zumindest ein vorvulkanisierter Materialstreifen aufgewickelt wird.

6. Verfahren nach zumindest einem der vorhergehenden Ansprüche, dadurch gekennzeichnet, dass der Materialstreifen mittels Extrusion erzeugt wird.

7. Verfahren nach zumindest einem der vorhergehenden Ansprüche, dadurch gekennzeichnet, dass die Leitfähigkeit des Materialstreifens mittels einer Lösung aus Kautschuk und/oder Kunststoff erzeugt wird.

8. Verfahren nach Anspruch 7, dadurch gekennzeichnet, dass der Materialstreifen aus einer leitfähigen Lösung aus Kautschuk und/oder Kunststoff besprüht wird.

9. Verfahren nach Anspruch 7, dadurch gekennzeichnet, dass der Materialstreifen in eine Lösung aus Kautschuk und/oder Kunststoff getaucht wird.

10. Fahrzeugluftreifen, dadurch gekennzeichnet, dass er nach einem Verfahren nach zumindest einem der vorhergehenden Ansprüche hergestellt ist.
